# EUROPEAN PATENT APPLICATION

(11) **EP 2 404 878 A1**
(43) Date of publication of application: **11.01.2012**
(21) Application number: 11172405.0
(22) Date of filing: 01.07.2011
(51) Int. Cl.: C02F 3/00, G01F 23/16

(54) **Method of draining liquid**

(30) Priority: 07.07.2010 RU 2010127988
(71) Applicant: Obshchestvo ogranichennoi otvetstvennostyu "EUROBION", Kubinka, Odintsovskii rayon 143070 (RU)
(72) Inventor: Bobylev, Yuriy Olegovich, 143000 Odintsovo (RU)
(74) Representative: Benatov, Emil Gabriel

(57) **Abstract**

The invention is referred to metered liquid drain from the purifiers with activated sludge, precipitation tanks, aero tanks and others. It represents a method of metered liquid drain in the area of limited lower level by means of an air-valve dispenser with a diaphragm (12) and surface tension membrane at the water-air boarding line. The change of the rate of liquid drain from the tank (1) is performed by means of regulating of air supply to the area of air bubbles formation. The air-valve dispenser consists of a reservoir with a J-shaped drain pipe (4), where the larger bend of the pipe is connected with the outlet pipe (3), the inlet of the smaller bend is below the bottom of the outlet pipe (3); the air nozzle (7) is located in the smaller bend of the J-shaped drain pipe (4), above the edge of the pipe's lower bend. It provides metered liquid drain, reduces power consumption and controls water level in the system with an abrupt drop of the amount of the supplied water due to dynamically forming of a locking air bubbles in the drainage system.

## Description

The present invention relates to the methods and mechanisms used for metered liquid drain from a tank when it is necessary to maintain the certain steady level of the liquid. It particularly refers to biosystems with gravity-flowing bleeding used for domestic waste water treatment by activated sludge in suspension. They can also be used in the clarification tanks of the sewage treament plants, activated sludge reactors, aero systems for garbage separation of sewage pumping stations, and other plants, requiring metered drain to maintain the certain steady liquid level or garbage separation.

In one prior art embodiment the sewage treatment unit is equipped with the clarification tank and purified liquid withdrawal system separated by a partition from the clarification tank with the liquid inflow in the lower part into its drain pipeline and the cross flow into the outlet in the upper part. In this embodiment the liquid is extracted by the crossflow (Patent RU No 2130901, C 02 F 3/08 as of 1999). The plant thus far proposed is equipped with the sludge sedimentation and drainage system. The entry zone of the purified liquid drainage pipeline is located above the sludge drain pump, what causes an entrapping of the new sludge particles into the purified liquid drainage pipeline. It degrades the quality of the purified liqiud. Besides that the liquid drainage system structure of the plant thus far proposed is not connected with the plant efficiency and accident free operating mode.

In yet another prior art embodiment the plant for biological domestic sewage treatment is equipped with a clarification tank connected by the overflow outlet with the purified water bilge well. The opening is located in the partition between them in the upper part (useful model RU No 26722, A 01 K 63/04, as of 2002). It is quite a conventional plant for purified liquid drainage, but it does not provide for the metered liquid drain and for the standard quality purification. Besides, it allows the presence of impurities in the drain liquid. It stops functioning when the liquid level goes down the overflow outlet. On the other hand, it does not enhance the plant capacity subject to the excess amount of waste water.

In another embodiment the liquid batch dispensing mechanism consists of a casing, air tube, and a membrane leakproof connected to the case by the cover, locking parts with the gear system to supply and drain the liquid, and an actuating unit with an additional regulating pin partially coiled with a chain, the membrane position sensor and an additional air pipe located in the membrane and leakproof connected to it. The additional air pipe is located concentrically on another air pipe inside the case. Both the pipes are leakproof connected. Part of the chain coiled around the regulating pin is located on the membrane. The membrane position sensor is connected by the tie line with the actuating unit which is linked to the locking parts gears. It constitutes one of the methods of liquid measuring (patent of invention RU No 2054631, G01F13/00 as of 1996). These complex engineering solutions are meant for high precision liquid batch dispensing. They cannot be used for common consumer and industrial devices working with huge nonuniform liquid volumes.

In yet another embodiment the siphon dispensing mechanism consists of a feed pipeline with the adjusting device connected with the measuring tank where there is an ascending siphon pipe, the double-arm lever located on the horizontal axis of rotation on one end of which the locking part for the siphon tube is fixed. It is different because there is a filler with an external support fixed on the end of the descending siphon pipe inserted in it, an air valve located on the top of the siphon hump and a constant magnet. The locking part is located under the descending siphon pipe in the filler and the constant magnet is located on the external support with a capability to move vertically and to interact with the other lever arm made of ferromagnetic material (patent of invention RU No 2008621, G01F13/00, as of 1994). This device pertains to professional equipment with high precision batching. It is irrational to use its complex structure for easy devices with metered liquid drain.

The closest to the claimed invention is the method and mechanism for waste water treatment consisting of an activated sludge clarifier with a damper for incoming partially purified water, an outlet filter, an outlet pipe for pure water, an aerator that crashes the bio cover which floats on top, a pump for extracting bio cover, realized as the J-shaped pipeline (patent of invention RU No 2305662, C 02 F 3/12, as of 2007). The present method and mechanism are of more general purpose than the previous engineering solutions but the liquid batching efficiency of this embodiment is insufficient for the complex conditions of waste water irregular inflow. Moreover, this device has rather complex construction for purified water discharge.

The present invention is aimed to solve the engineering task to enhance the way of metered liquid drain, to simplify the devices for metered liquid drain, to reduce the amount of power demanding for liquid level control in the system with a sudden drop of inflow liquid, together with achieving an accident free operating mode, and improving its reliability by forming of dynamic locking air bubbles, working as dispensing mechanism in the drainage system.

The assigned engineering task is solved as follows: liquid drainage and drain from the tank is carried out in the middle part whereas liquid drain is carried out at the maximum permissible low liquid level above the drainage and dispensing level. Liquid dispensing for drainage from the tank is implemented through the use of locking air bubbles, dynamically forming by air-valve dispenser under the diaphragm and a surface tension membrane on the water-air boundary. The liquid drain speed is controlled by adjusting the air fed into the zone where the air bubbles are generated. If the liquid level in the tank suddenly elevates to the maximum operating level - the emergency liquid drain is produced, during this the bubble flow is directed in the opposite direction by variation of hydrostatic pressure over the drainage area, so the bubble flow is used as an air lift for fast emergency liquid drain. After the liquid is fed to the tank it is left for settling and aeration of the liquid surface in the dispensing area where the solid particles are repelled. For the purpose of liquid surface aeration the air coming up from air-valve dispenser is used.

The air-valve dispenser's dispensing mechanism includes a tank with a variable liquid level, an outlet pipe, and a J-shaped drain pipe, located in the tank and equipped with a nozzle feeding air inside the pipe. The J-shaped drain pipe larger bend is connected to the outlet pipe. The inlet of the J-shaped drain pipe smaller bend is located under the bottom of the outlet pipe. The air feed nozzle is located in the smaller bend over the pipe lower break edge. The inlet of the J-shaped drain pipe smaller bend is furnished with an inner diaphragm. The J-shaped drain pipe is provided with some additional little bend pipes connected by the general pipe in the lower part. The air-valve dispenser is furnished with an additional tank, and the outlet pipe of larger bend is located vertically in the additional tank. The diaphragm may be extendible or removable both.

The invention is illustrated by the drawings. Fig. 1 is a flow chart showing an instance of using of air-valve dispenser for waste water biological treatment at the waste water normal level. Fig. 2 shows the same at the waste water maximum level in the plant. Fig. 3 shows a high capacity device used for liquid drain with an air-valve dispenser. Fig. 4 shows a levelling aeration tank with an air-valve dispenser. Fig. 5 shows an air system for garbage separation of a sewage pumping station. Fig. 6 shows an upper part of the air-valve dispenser inlet with a diaphragm. Fig. 7 shows the same but with the variable cross section diaphragm.

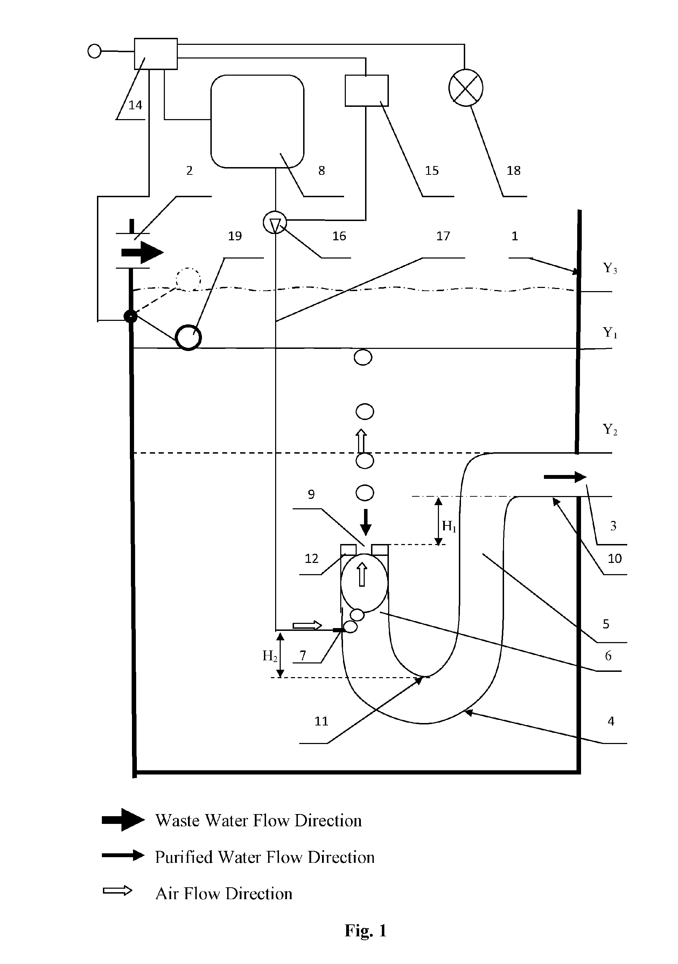

The air-valve dispenser can be used for instance in the clarification tank of the biological waste water treatment system, levelling aeration tank, in the air systems for garbage separation of a sewage pumping stations, or in any other tank with a variable liquid level. The air-valve dispenser consists of tank 1 with a variable liquid level. Fig. 1 shows an air-valve dispenser that can be used in the waste water treatment systems, including tank 1 with inlet pipe 2, and outlet pipe 3. In tank 1 there is J-shaped drain pipe 4. Larger bend 5 of J-shaped drain pipe 4 is connected to outlet pipe 3. The smaller bend 6 of J-shaped drain pipe 4 is furnished with an air nozzle 7 connected to compressor 8. Inlet 9 of smaller bend 6 of J-shaped drain pipe 4 is located below bottom 10 of outlet pipe 3 at the height of H1. The height H1 of inlet 9 of smaller bend 6 depends on the assigned system capacity and subject to sustained generation of airy bubbles. Air nozzle 7 is located in smaller bend 6 above the upper edge of lower break 11 of J-shaped drain pipe 4 at the height of H2. The height H2 is calculated depending on the height of liquid column above the inlet of tank 1 and assigned system capacity. To enhance the liquid drain plant operating efficiency, inlet 9 of smaller bend 6 of J-shaped drain pipe 4 is provided with ring shaped diaphragm 12 which can be extendible by virtue of movable plates 13 or removable.

Compressor 8 is connected with control unit 14 which can be connected with regulator 15 of valve 16 of air line 17 to feed an air to air nozzle 7. Control unit 14 can be furnished with warning system 18 and connected to emergency float sensor 19.

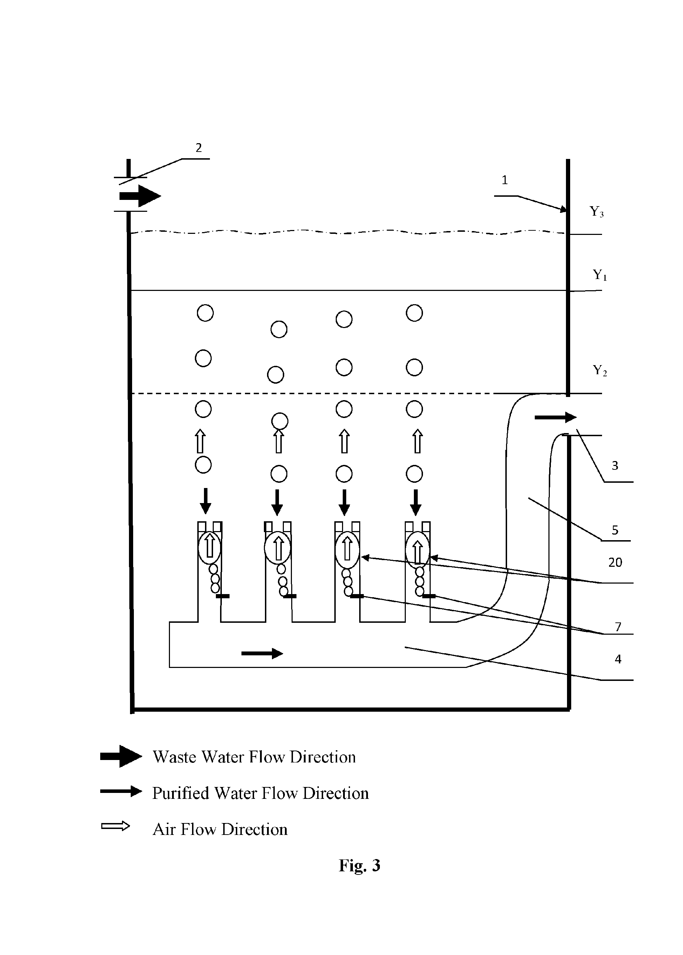

Instead of one smaller bend 6 there can be several smaller bends 6 in the shape of pipes 20 connected in the lower part by J-shaped drain pipe 4 (Fig.3). Such interpretation of air-valve dispenser is used to considerably enhance the general system capacity.

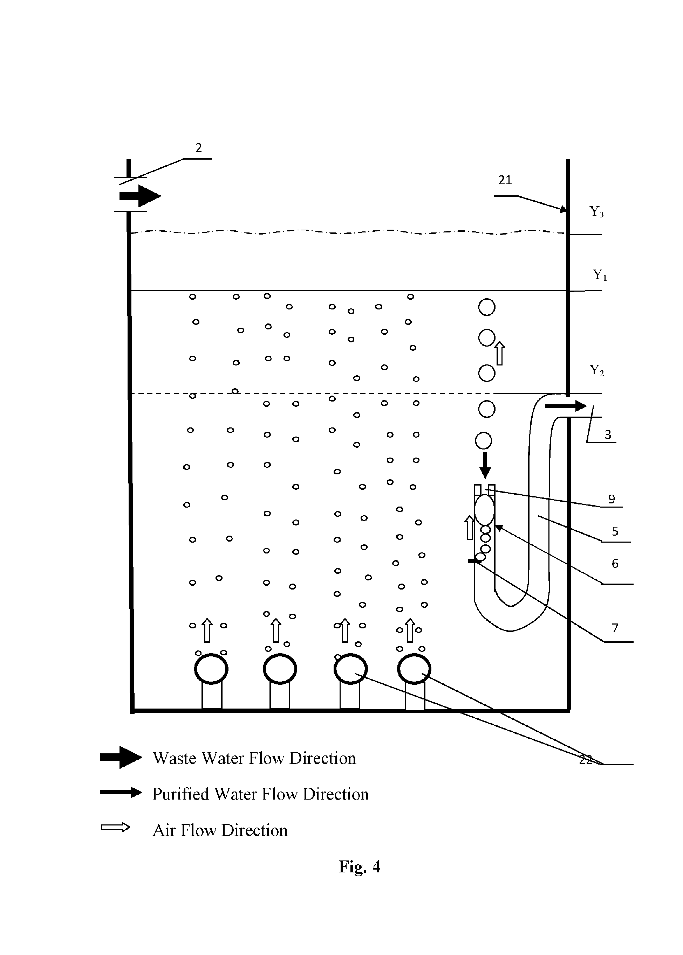

The using of air-valve dispenser in leveling aeration tanks 21 with aeration system 22 (Fig. 4) makes it possible to simplify the structure of aeration tank 21 and to enhance its opearting reliability.

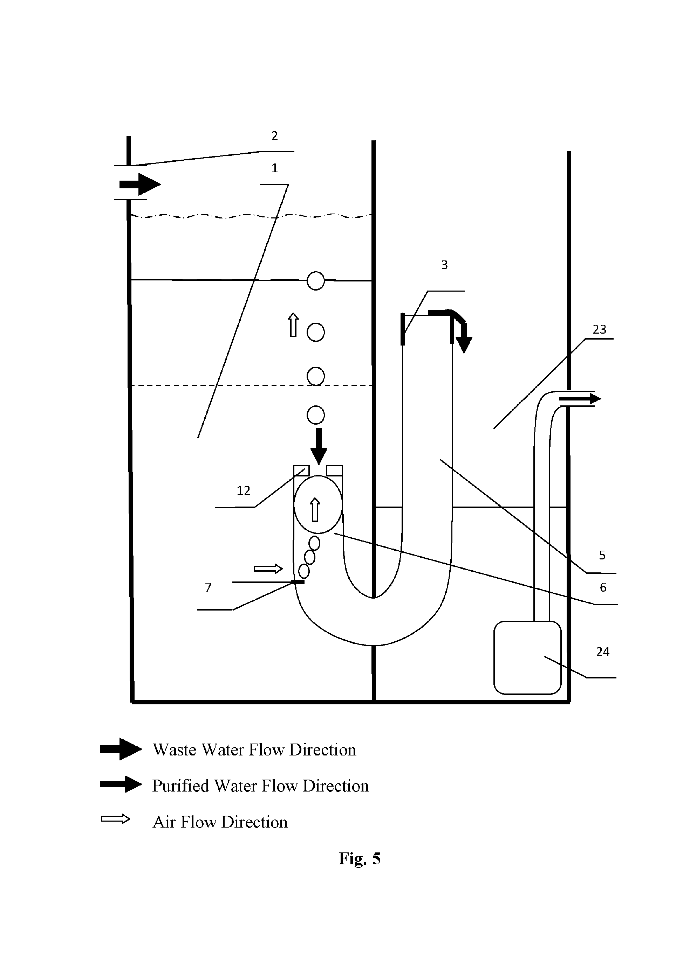

The air-valve dispenser can be used in the air systems for garbage separation like Turboscreen (Fig. 5), for example in sewage pumping stations. In this case smaller bend 6 of J-shaped drain pipe 4 is located in tank 1, whereas larger bend 5 with vertically located outlet pipe 3 is located in additional tank 23 with pumping unit 24.

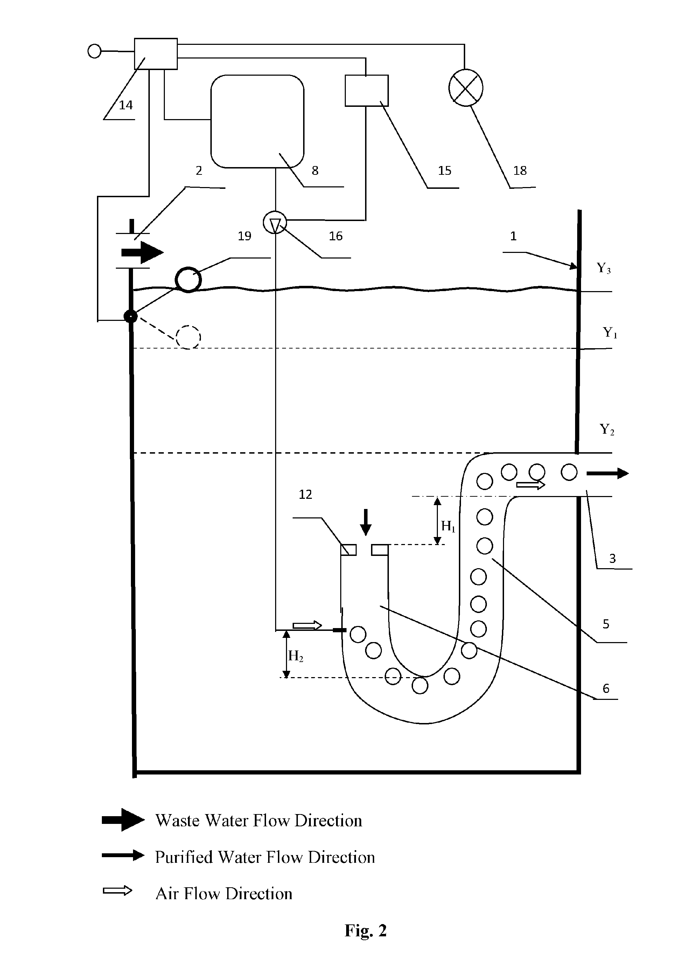

The air-valve dispenser operates as follows. Let's examine a situation where it is located in the clarification tank of the biological waste water treatment plant as shown in Fig. 1 and 2. Because the waste water level in tank 1 constantly changes, Y1 is considered to be conventional normal operating level above the upper part of outlet pipe 3, when there is enough waste water for waste water discharge efficient operation. When the liquid in tank 1 reaches level Y2 hydrostatic pressure reduces to minimum. Its inflow in inlet 9 of smaller bend 6 is completely stopped until the next waste water portion inflow. In this case such location of inlet 9 of smaller bend 6 has generally the function of garbage separator, and less the function of the plant capacity control. The level of outlet pipe 3 controls the liquid residual level in the tank and prevents the situation when in the plant there is so little waste water that it can deteriorate the quality or stop the activated sludge operation aimed at organic substances processing. It means that the outlet of pipe 3 of larger bend 5 stops the drainage of liquid at the same minimum level that is necessary to maintain the activated sludge activity for other technological tasks.

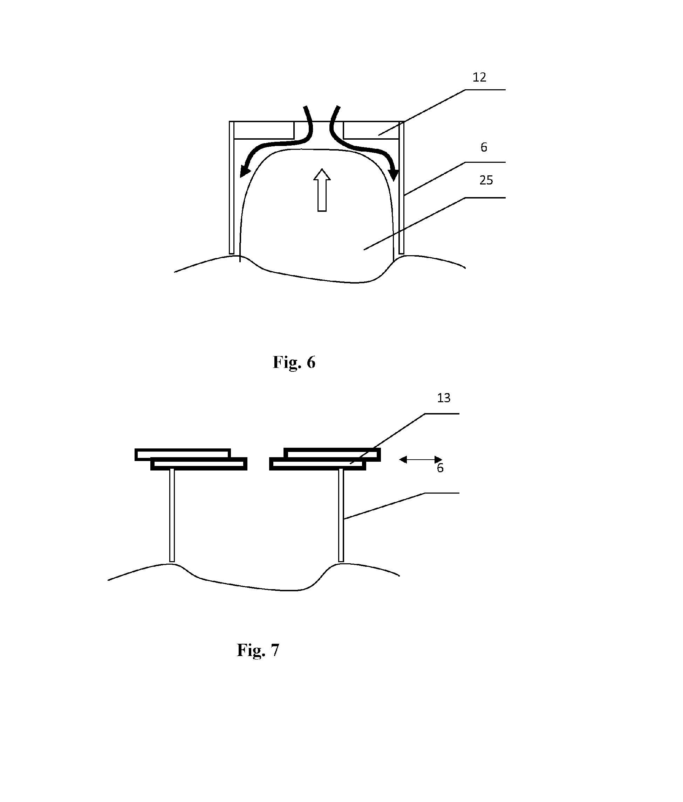

On the liquid surface in tank 1 there can be a bio cover, consisting of bio fragments finest particles, that should not enter J-shaped drain pipe 4 designed for purified water drain from tank 1. That is why by virtue of compressor 8, connected with control unit 14, the air is fed to air nozzle 7, located in smaller bend 6 above the edge of lower break 11 of J-shaped drain pipe 4. Ring-type diagram 12 measures the amount of air passing up to tank 1 through inlet 9 of smaller bend 6. The air bubbles accumulate at diaphragm inlet 12, and merge forming the biggest bubble 25 in the upper part. Fig. 6 depicts the moment when the liquid enters through diaphragm 12 from tank 1 into J-shaped drain pipe 4. By virtue of liquid pressing force above diaphragm 12 part of purified water bypasses dynamically locking air bubble 25 located at the top and forming the locking surface tension membrane on the air-water boundary on all sides and squeezes up the stream of bubbles. This element works as a dispensing mechanism pushing up a small air bubbles at regular intervals and simultaneously passing part of the water down. Having reached the liquid surface the bubbles crash and aerate the bio cover pushing it aside into different directions from inlet 9 of smaller bend 6 and prevent its entering into the flow of purified water.

The situations when excessive amounts of waste waters are discharged are characteristic of waste water treatment systems. In this case the level of liquid in tank 1 reaches the value Y3, at which water normal operating level Y1 shown in Fig. 2. is far exceeded. As a rule in such systems emergency float sensor 19 is actuated turning on the liquid emergency drain system. However, in this case it is possible to do without the warning system as when the fluid column over inlet 9 goes above the normal operating level Y1 the air bubbles are pushed away from air nozzle 7 in the opposite direction - to the exit from J-shaped drain pipe 4 to outlet pipe 3. It means that the larger bend 5 of J-shaped drain pipe 4 starts working as an airlift. The excessive liquid from tank 1 is quickly disharged, the waste water total level in the systems levels out. After the water normal operating level Y1 is reached the process of pushing out the bubbles through diagphragm 12 resumes. Having calculated or regulated the opening in diaphragm 12 depending on the assigned plant capacity it is possible to achieve the optimal duration of waste water presence in the biological treatment zone. Moreover, the smaller the opening in diaphragm 12 is, the lower capacity the dispensing system has. If the air consumption reduces the capacity increases. By virtue of using the air-valve dispenser the clarification tank of the biological treatment system has the self-recovering waste water level.

In high capacity plants in particular in the plants with single-step waste water drain, it is better to use several additional smaller bends 6 in the form of pipes 20, connected in the lower part of J-shaped drain pipe 4 (Fig. 3). If the air-valve dispenser is realized by this way all pipes 20 have the function of measured liquid passing through inlets 9. Not only they increase the amount of passing purified liquid but they increase uniformity of crashing and aeration of the bio cover on the liquid surface in tank 1.

In levelling aerotanks 21 (Fig. 4) with air-valve dispenser, aeration system 22 provides for the waste water "bubbling" effect and allows for "crashing" organic fragments, organic materials degradation and oxidization. The air-valve dispenser provides for the self-recovering waste water level controlling the liquid discharge from aeration tank 21, simplifying its structure and enhancing the plant general operating reliability.

The air-valve dispenser in the sewage pumping station (Fig. 5) provides for fail-safe separation of floating garbage. At the same time the liquid in the system is dispensed at the maximum level. It is done by an easy and reliable method - by using J-shaped drain pipe 4 installed in such a way that smaller bend 6 of J-shaped drain pipe 4 is located in tank 1, and a larger bend 5 with vertical outlet pipe 3 is located in additional tank 23 with pumping unit 24. When the critical level Y2 of the fluid column is reached in tank 1, the discharge through inlet 9 is over, keeping the optimal amount of liquid in tank 1. This helps to maintain stable lower level Y2 of waste water in the plant till a new portion of waste water arrives. When the new portion of liquid enters tank 1, its level starts to increase. Until the waste water level reaches its assigned value, the air-valve dispenser does not start to work. The air bubbles from air nozzle 7 push away all particles and bio-formations, not allowing them to pass from tank 1 into additional tank 23. Emergency liquid drain from tank 1 in the sewage pumping system works in the way that is shown in Fig. 2. It is particularly relevant for heavy rains when rainwater and stormwater enter the sewage system.

The results of experimental analysis of the air-valve dispenser show that the more air is delivered through air nozzle 7, the lower general capacity the plant has. Whereas the larger of inlet 9 in diaphragm 12 is, the greater capacity the plant has. The table below shows the results of the experimental analysis of diaphragm 12 with inlet 9 which diameter equals 25 mm and J-shaped drain pipe 4, which diameter equals 110 mm. Approximate liquid drain equals to 1,000 liters per hour. The level changes from the lowest level Y2 to the level Y3, which is 50 cm higher than the level Y2. After that the emergency drain happened.

**Table**

| Air Nozzle Outlet Diameter, mm | Pumping Time of One Cubic Meter of Water |
|---|---|
| 0.6 | 6 hours 40 min. |
| 0.8 | 10 hours 26 min. |
| 0.9 | 11 hours 27 min. |
| 1.0 | 11 hours 59 min. |
| 1.1 | 13 hours 40 min. |
| 1.2 | 17 hours 22 min. |

The constantly results of the experiments, were obtained with the ratio of dimensions of the cross-section of inlet 9 in diaphragm 12 and cross-section of the pipe of smaller bend 6 of J-shaped drain pipe 4 from 0.1 to 0.9. Therefore, it is identified that the system capacity is subject to control in the wider range preserving the main advantages of the air-valve dispenser - easy and stable process of liquid measuring in the wide range of variable liquid level in the system.

The method of metered liquid drain embodied in the above mentioned realizations deploying the air-valve dispenser includes fluid supply into tank 1 through inlet pipe 2 and liquid drain by gravity from tank 1 through outlet pipe 3. The liquid is measured for drainage from tank 1 in the middle part at the height H1 through diaphragm 12 of inlet 9 of smaller bend 6 of J-shaped drain pipe 4, located under bottom 10 of outlet pipe 3. The liquid is drain through J-shaped drain pipe in the zone Y2 which represents the maximum permisssible low liquid level which is above the liquid drainage and measuring level. The liquid drain speed from tank 1 is regulated by the air fed into the part where the air bubbles are generated - air nozzle 7, located in the smaller bend 6 above the edge of lower break 11 of J-shaped drain pipe 4. If the liquid level rises sharply to the level Y3 in tank 1 and if the emergency liquid drain happens when its maximum operating level Y1 is exceeded subject to hydrostatic pressure over the drainage zone, the emergency liquid drain happens, and the airflow changes its direction from air nozzle 7 to the opposite direction. The air flow from air nozzle 7 is used as an airlift to drain liquid from tank 1 through J-shaped drain pipe 4. If an air-valve dispenser is used in sewage disposal plants or in the systems with contaminated liquid, after the liquid is fed into tank 1, it is settled and the liquid surface is aerated in the measuring part, and solid particles are pushed away from this zone. The air coming up by the air bubbles from air nozzle 7 and is used to aerate the liquid surface in the measuring area.

The use of air-valve dispenser in the above mentioned systems provides for simplifying their structure and reducing power consumption for processing and enhancing operating reliability. The plant is characterized by its simple structure, opertaional and service cost effectiveness. The air-valve dispenser structure provides for efficient operation of the above mentioned systems in the normal and emergency operating modes. To provide for additional system operalional safety, it can be furnished with control unit 14 with warning system 18 and emergency floating sensor 19. In this case in the emergency mode the system control unit disables the air inflow to air nozzle 7. After that more excess liquid is drain through J-shaped drain pipe 4 until the optimal level for further system operation is reached. After that control unit 14 form electric signal to feed air to air nozzle 7, and the plant starts into its normal operating mode.

Therefore, the technological result achieved by using the claimed invention consists in enhancing the method of metered liquid drain and simplifying the liquid metered drain device, reducing energy demand on controlling the liquid level in the system together with achieving accident free operating mode and enhancing its operational reliability by generating a dynamic locking bubbles with the dispensing mechanism of air-valve dispenser.

## Claims

1. The method of metered liquid drain which includes a liquid supply to the tank (1) and its drainage under gravity outside the tank (1), at that the selection and metering of the liquid for its being drained from the tank (1) is performed in its middle area, and the liquid drainage is performed in the area of the ultimate lower level Y₂ of the liquid being above the level of liquid selection and metering, at that the metering performed for liquid drainage from the tank (1) is performed by means of the air bubbles dynamically formed under the diaphragm (12) and the membrane of surface tension at the air-water boarding line, and the change of the rate of the liquid drain from the tank (1) is performed by means of regulation of air supply to the area of the air bubbles formation, and in case of a sharp increase of the liquid level in the tank (1) and when it exceeds the maximal working level Y₃ the emergency liquid drainage is supposed to be carried out, at that under the pressure of the liquid column over the selection area, the bubble flow is redirected into the reverse direction and used as an airlift for quick emergency liquid drainage.

2. The method of metered liquid drain of claim 1, **characterized in that** after the liquid is supplied to the tank (1) the precipitation and the aeration of its liquid surface in the metering area are carried out with repulsion of solid parts from this area, at that the air, flowing up from the air-valve dispenser, is used for aeration of the liquid in the metering area.

3. Air-valve dispenser, comprising the tank (1) with a variable liquid level and outlet pipe (3) and the J-shaped drain pipe (4) of liquid drain, located in the tank, made as J-shaped and supplied with a air nozzle (7) for air supply to the J-shaped drain pipe (4), at that the larger bend of the J-shaped drain pipe (4) is connected with the outlet pipe (3), and the inlet (9) of the smaller bend (6) of the J-shaped drain pipe (4) is located lower than the bottom (10) of the outlet pipe (3), at the same time the air nozzle (7) is located in the smaller bend (6), above the edge of the J-shaped drain pipe (4) lower bend, at that the inlet (9) of the smaller bend (6) of the J-shaped drain pipe (4) is equipped with an inner diaphragm (12).

4. Air-valve dispenser of claim 3, **characterized in that** the J-shaped drain pipe (4) is equipped with additional smaller bends, made in the form of several pipes (20), connected in the lower part of the J-shaped drain pipe (4).

5. Air-valve dispenser of claim 3, **characterized in that** it is furnished with an additional tank (23), and the outlet pipe (3) of the larger bend (5) of the J-shaped drain pipe (4) which is vertically located in the additional tank (23).

6. Air-valve dispenser of claim 5, **characterized in that** the diaphragm (12) is made as expandable.

7. Air-valve dispenser of claim 5, **characterized in that** the diaphragm (12) is made as changeable.
